**Europäisches Patentamt**

**European Patent Office**

**Office européen des brevets**

(19)

(11) Publication number: **0 127 168**
**B1**

(12)
# EUROPEAN PATENT SPECIFICATION

(45) Date of publication of patent specification: **20.01.88**

(51) Int. Cl.⁴: **G 01 T 1/29**

(21) Application number: **84106074.2**

(22) Date of filing: **28.05.84**

(54) **Method of measuring radiation intensity.**

(30) Priority: **27.05.83 JP 93598/83**

(43) Date of publication of application:
**05.12.84 Bulletin 84/49**

(45) Publication of the grant of the patent:
**20.01.88 Bulletin 88/03**

(84) Designated Contracting States:
**CH DE FR LI NL SE**

(56) References cited:
**EP-A-0 077 678**
**US-A-2 745 968**
**US-A-3 134 018**
**US-A-3 935 449**

(73) Proprietor: **FUJI PHOTO FILM CO., LTD.**
**210 Nakanuma Minami Ashigara-shi**
**Kanagawa 250-01 (JP)**

(72) Inventor: **Shiraishi, Hisashi c/o Fuji Photo Film**
**Co. Ltd.**
**No 210, Nakanuma Minami-ashigara-shi**
**Kanagawa (JP)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

Courier Press, Leamington Spa, England.

# 0 127 168

**Description**

This invention relates to a method for measuring radiation intensity of a radioactive substance according to the preamble of claim 1.

Description of the prior art

Heretofore, as methods of measuring the intensity of radiation of a radioactive substance (substance containing a radioisotope), namely radioactivity thereof, there are known, for example, scintillation counting methods using a substance (so-called scintillator) capable of absorbing a portion of radiation energy emitted by the radioactive substance and emitting light (fluorescence).

In this method, the radioactivity of radioactive substance is measured by causing the scintillator to absorb a radiation emitted by the sample, detecting light emitted by the scintillator by means of a photomultiplier and counting it as electric pulse. For example, thers is well known a liquid scintillation counting method wherein a liquid scintillator composed of a solute (fluorescent agent) dissolved in an organic solvent is introduced into a liquid sample to detect radioactivity of the liquid sample.

The scintillation counting method is applied to the measurement of radioactivity of the tissue of an organism and/or substances originating from an organism which contains a radioactive substance. It is generally difficult to dissolve such a sample in a solvent so that the sample is generally burnt in an oxygen-containing atmosphere to convert $^{14}C$ in the sample into $^{14}CO_2$ which is then absorbed by an appropriate absorbent, and a liquid scintillator is introduced thereinto to measure radioactivity of the sample. The measurement of $^{14}CO_2$ produced by a chemical reaction such as an enzyme reaction is also conducted in the same manner as mentioned above.

In a radio-gas chromatography, the radioactivity of a sample is measured after dissolving the collected gaseous sample in a solution containing a scintillator.

When the sample is a solid sample from which a strong radiation such as γ-rays radiates, the radioactivity of the sample is measured using a well-type scintillation counter composed of a combination of a solid scintillator with a photomultiplier and fixing the sample together with the container in the cavity (well) of the scintillator. By means of this well-type scintillation counter, the measurement of radioactivity of a sample in the form of a liquid or a gas sealed in a tube can be conducted in a similar manner.

As described above, the scintillation counting method is a useful means for measuring the radioactivity of samples. Particularly, the liquid scintillation counting method has many advantages in that even when a radiation from a radioactive substance is a feeble one such as α-rays or β-rays, the radioactivity thereof can be measured, so that said method is widely used for the measurement of radioactivity of samples.

The mechanism of scintillation in the liquid scintillation counting method is described as follows: A molecule of the solvent in which the solute (fluorescent agent) is dissolved is initially excited by a radiation emitted by a radioactive substance in a liquid sample, and then a solute molecule (scintillator) is excited through impingement of the excited solvent molecule on the solute molecule, or the like. In the course of transferring of the radiation energy from the solvent molecule to the solute molecule, there occur other phenomena such that the energy is transferred between the solvent molecules by interaction between the solvent molecule in the excited state and that in the ground state, or that the energy is transferred from the solvent molecule in the excited state to the other solute molecule than a scintillator by interaction therebetween before the scintillator is excited. The transfer of energy takes place not only through the interaction between molecules such as impingement, but also through such a phenomenon that the scintillator absorbs light emitted by the excited solvent molecule or other excited solute molecule.

However, in the course of the energy-transfer procedure, there also occurs such a quenching phenomenon that the excitation energy is absorbed by a portion of the solvent molecules or other solute molecules so as to be converted into heat, etc., or that the light emitted by the scintillator is absorbed by a light-absorbing substance contained in the sample.

The liquid scintillator, which is necessarily used in said liquid scintillation counting method, is expensive, and has to be isolated and refined to re-use it. Usually, it is difficult to recover the scintillator in a high purity so that it is not generally re-used and the measuring cost is increased thereby. Further, there are problems in handling thereof. For example, the used scintillator containing the radioisotope may cause a pollution problem in the disposal stage.

Other problems reside in that the solvents allowed to use in conjunction the solutes (fluorescent agent) are generally limited to certain organic solvents so that there occurs difficulty in choosing a solvent for a given sample and a certain specific procedure has to be taken in preparing a sample in the case that the sample is sparingly soluble in the solvent.

Since the scintillation mechanism of the liquid scintillator is complicated as stated above, the counting efficiency (that is, intensity of radioactivity to be detected) is apt to decrease through the quenching effect due to impurities contained in the sample or of the sample *per se*. For example, light emitted by the scintillator is easily quenched by an oxygen dissolved in the liquid scintillator, or is absorbed (i.e. quenched) by a colorant in the case that the sample solution is colored thereby. In the case that a sample is sparingly soluble, it is not easy to prepare a sample solution in a homogeneous phase, and the unhomogeneous phase thereof causes internal absorption of a radiation emitted from the sample. For this reason, it is necessary to accurately determine the counting efficiency of the sample by making correction

2

for quenching caused by the above-mentioned various phenomena, and this makes measuring operation more complicated. Further, there is a disadvantage that it is substantially difficult to accurately measure the radioactivity of the sample even if the correction for quenching is made.

In order to prevent the counting efficiency from being lowered by quenching effect of contaminants, impurities and colored substances contained in the sample, the sample has to be carefully prepared and high skill and much experience are required for operators. The pre-treatment of the sample to remove the contaminants is of importance to the measuring operation.

In the conventional scintillation counting method, the measurement of radioactivity of a sample is conducted by a real time operation. Namely, it is necessary to continuously measure light emitted by the scintillator for a given time (for example, for several minutes to several ten minutes) after the sample is introduced into the scintillator solution. If the intensity of radiation from the sample is low, the measuring time (i.e., counting time) extends for a long time so that it can be hardly said that the measuring efficiency and the handling efficiency of measuring apparatus are sufficiently high. Therefore, in the case that a great number of samples are involved, for instance, the case that a great number of samples obtained from liquid chromatography are involved, it is difficult to treat such a great number of samples once and the waiting period accordingly extends for many hours so that it disadvantageously takes a long time until the results are obtained. Particularly, in the case that the half-life of radioisotope in the sample is short, it becomes difficult to measure the radioactivity thereof correctly. Further, in the case that the radiation intensity is low, the measurement becomes more difficult. This means that an apparatus (for example, dark current drift of photomultiplier) to be used must be stable over a long period of time. To keep the stability of apparatus at a high level, the apparatus necessarily becomes expensive, or much skill and experience to adjust the apparatus are required.

EP—A—0 077 678 describes a radiation image recording system in which a radiation image is recorded on a stimulable phosphor and then read out to reproduce a visible radiation image. A stimulable phosphor is a phosphor which is able to store radiation energy upon exposure thereto and then emits light in proportion to the stored energy of the radiation upon stimulation with a stimulating ray such as a visible ray. The recording material is formed of a phosphor layer and fixed on a supporting material. The recording material is circulated and re-used to record radiation images thereon. The system comprises a mechanism for circulating the recording material with respect to an image read-out section by repeatedly moving the supporting material and the image read-out section with respect to each other. An erasing apparatus is provided for eliminating the radiation energy remaining on the recording material after the read-out step.

The use of phosphor elements for the detection and measurement of penetrative radiation such as gamma rays is described in US—A—2,745,968. The phosphor elements used for this purpose possess the property of converting penetrative radiation to radiation in other ranges of the spectrum such as the ultraviolet range and the visible light range. These elements include a phosphor per se distributed as a solid or liquid and as a dispersion or a solute, or both, in a matrix of a material capable of being shaped as desired and capable of conducting the radiation developed in the phosphor. The phosphor elements have at least one section such as a face for exposure to an interception of the penetrative radiation to be detected and measured, and at least one second section such as a face for exposure to a detecting and measuring device capable of detecting and measuring the converted radiation. These sections are spaced from one another to ensure exposure of the penetrative radiation to a substantial portion of the volume of the phosphor element.

US—A—3,134,018 discloses a method and device for continuous measurement of radioactivity of substances contained in a liquid. The liquid with radioactive substances contained in it is fed in a uniformed stream to a strip of absorbent material in uniform motion. Heat is applied to the strip to evaporate the liquid. Subsequently the radioactivity of the substances deposited on the strip is measured by a radiation detector.

US—A—3,935,449 relates to a method for use in liquid scintillation measurements to feed an accurately determined amount of radioactive substance to a fluid scintillation system for a calibration measurement. An accurately determined amount of radioactive substance is adsorbed to a carrier which is introduced into the fluid scintillation system.

The invention as claimed is intended to remedy the above-mentioned problems associated with the conventional scintillation counting method, particularly the liquid scintillation counting method.

This object is solved by the features of claim 1.

Advantageous embodiments of the invention are claimed by the subclaims.

Brief description of drawings

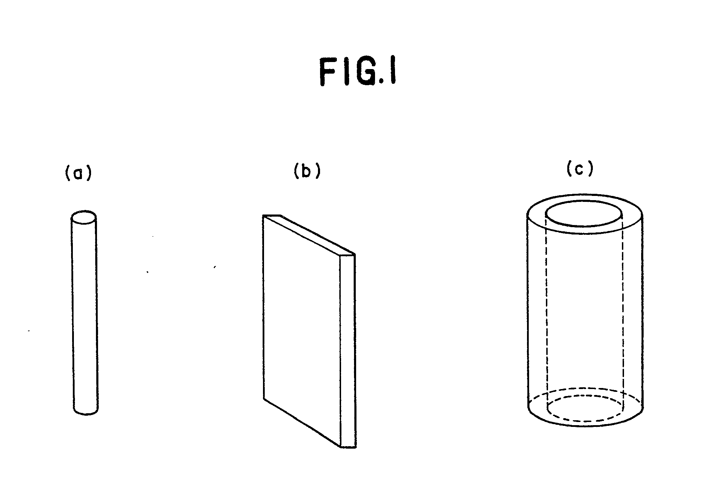

Figure 1-(a) to 1-(c) diagrammatically show the embodiments of the measuring instrument charged with a stimulable phosphor according to the present invention.

Detailed description of the invention

The stimulable phosphor used in the present invention has the property of emitting light (giving stimulated emission) when excited with an electromagnetic wave (stimulating rays) such as visible light or infrared rays after absorbing a radiation. Accordingly, the radioactivity of a sample can be measured in such a manner that a radiosensitive means containing a stimulable phosphor therein is caused to absorb a radiation radiated from a radioactive substance in a sample, and then said means is irradiated with an electromagnetic wave (stimulating rays) such as visible light or infrared rays to release the radiation energy stored in the instrument in proportion to the applied radiation dose as light emission (stimulated emission), which is photoelectrically detected and converted into an electric signal.

According to the method of the present invention, the conventional scintillator is not required in the measurement of the radioactivity of a sample, and the operation of mixing (dissolving or suspending) the scintillator with the sample in a container is not either required, although said operation has to be performed in the conventional liquid scintillation counting method. In the method of the present invention, the measurement can be made merely by introducing the radiosensitive means charged with a stimulable phosphor into a sample containing a radioactive substance, so that it is not necessary to separate the phosphor from the sample and to refine it after use. Accordingly, the means of the present invention can be repeatedly used and the cost for one measurement operation is reduced. The means is very easy to handle, because it can be encased with plastic material, etc.

A solvent is not necessarily employed in the present invention, but if desired, an optionally selected solvent can be employed, this feature being different from the conventional liquid scintillation counting method. Accordingly, the selection of a solvent and the preparation of a sample solution required in the use of the liquid scintillator are not always required in the method of the invention.

The sample is not necessarily dissolved in a solvent to prepare a liquid sample, and even when the sample is in the form of a solid or a gas, the radioactivity thereof can be easily measured by introducing the radiosensitive means into the sample.

Further, the above-mentioned quenching phenomena, particularly such as the phenomenon of quenching of the emitted light does not occur in the present invention. Hence, it is not necessary to make complicated quenching correction (determination of counting efficiency) for measuring the radioactivity of the sample, and the radioactivity thereof can be accurately measured without being greatly influenced by measuring conditions, etc. Accordingly, the measuring operation is simplified in this respect.

Since it is not necessary to remove impurities, etc. contained in the sample, the pretreatment of the sample as stated hereinbefore is not required, and much skill and attention based on experience are not required in the course of the preparation of the sample. The measurement of the radioactivity of the sample is made easier still in this respect.

The measurement of radiation intensity in the present invention basically comprises a step of storing radiation energy from a sample in the radiosensitive means charged with a stimulable phosphor, and a step of detecting stimulated emission corresponding to the radiation energy stored in said means. It is also possible to completely separate these two steps from each other. Storing the radiation energy in the radiosensitive means is conducted by placing the means in the sample for a certain period of time, so that accuracy of measurement is increased by choosing an appropriate storing time. Detecting the stimulated emission is conducted by irradiating the radiosensitive means with an appropriate light (light having a wavelength within the region of stimulation wavelength for the stimulable phosphor enclosed in the instrument) and causing the stimulable phosphor to emit light. By counting the amount of the emission, the intensity of radiation from the sample can be determined. Since the stimulable phosphor instantaneously emits light upon irradiation with stimulating rays, the period for photometric measurement of the stimulated emission (i.e. measuring time or radiation intensity) can be set independently of the radiation intensity, so that the measuring time can be greatly shortened. For example, a period of several seconds to several ten seconds is enough for the measurement.

Therefore, a great number of samples can be measured in one lot so that the working efficiency of the apparatus is increased, and the number of the measurement per unit time can be increased. Further, the storing operation for a great number of samples can be simultaneously made by using a plurality of the radiosensitive means, that is, the measurement of these samples can be advantageously done under the same conditions. This means that the radioactivities of a great number of samples can be measured with high accuracy under the same conditions even when a radioisotope having a short half-life and a feeble radiation is involved. Further, when a plurality of the radiosensitive means is used with only one measuring apparatus in the present invention, the measuring efficiency becomes substantially equal to that obtained in the case that a plurality of measuring apparatuses are used together in the conventional method.

The following illustrates the radiosensitive means charged with a stimulable phosphor, which is employed for the method of measuring a radiation intensity of the present invention.

The radiosensitive means charged with a stimulable phosphor employable in the present invention is, for instance, an comprising a binder in which the stimulable phosphor is dispersed and a covering material encasing the phosphor-containing binder. The covering material is provided to prevent the stimulable phosphor from chemical deterioration or physical shocks.

The stimulable phosphor employed in the present invention, as described hereinbefore, give stimulated emission when excited with stimulating rays after exposure to a radiation. In the viewpoint of practical use, the stimulable phosphor is desired to give stimulated emission in the wavelength region of 300—500 nm when excited with stimulating rays in the wavelength region of 400—850 nm.

Examples of the stimulable phosphor employable in the present invention include:

$SrS:Ce,Sm$, $SrS:Eu,Sm$, $ThO_2:Er$, and $La_2O_2S:Eu,Sm$, as described in U.S. Patent No. 3,859,527;

$ZnS:Cu,Pb$, $BaO \cdot xAl_2O_3:Eu$, in which $x$ is a number satisfying the condition of $0.8 \leqq x \leqq 10$, and

4

$M^{2+}O \cdot xSiO_2:A$, in which $M^{2+}$ is at least one divalent metal selected from the group consisting of Mg, Ca, Sr, Zn, Cd and Ba, A is at least one element selected from the group consisting of Ce, Tb, Eu, Tm, Pb, Tl, Bi and Mn, and $x$ is a number satisfying the condition of $0.5 \leq x \leq 2.5$, as described in US—A—4,326,078;

$(Ba_{1-x-y}, Mg_x, Ca_y)FX:aEu^{2+}$, in which X is at least one element selected from the group consisting of Cl and Br, $x$ and $y$ are numbers satisfying the conditions of $0 < x+y \leq 0.6$, and $xy \neq 0$, and $a$ is a number satisfying the condition of $10^{-6} \leq a \leq 5 \times 10^{-2}$, as described in Japanese Patent Provisional Publication No. 55(1980)-12143;

LnOX:xA, in which Ln is at least one element selected from the group consisting of La, Y, Gd and Lu, X is at least one element selected from the group consisting of Cl and Br, A is at least one element selected from the group consisting of Ce and Tb, and $x$ is a number satisfying the condition of $0 < x < 0.1$, as described in the above-mentioned US—A—4,236,078;

$(Ba_{1-x}, M^{II}_x)FX:yA$, in which $M^{II}$ is at least one divalent metal selected from the group consisting of Mg, Ca, Sr, Zn and Cd, X is at least one element selected from the group consisting of Cl, Br and I, A is at least one element selected from the group consisting of Eu, Tb, Ce, Tm, Dy, Pr, Ho, Nd, Yb and Er, and $x$ and $y$ are numbers satisfying the conditions of $0 \leq x \leq 0.6$ and $0 \leq y \leq 0.2$, respectively, as described in Japanese Patent Provisional Publication No. 55(1980)-12145;

$M^{II}FX \cdot xA:yLn$, in which $M^{II}$ is at least one element selected from the group consisting of Ba, Ca, Sr, Mg, Zn and Cd; A is at least one compound selected from the group consisting of BeO, MgO, CaO, SrO, BaO, ZnO, $Al_2O_3$, $Y_2O_3$, $La_2O_3$, $In_2O_3$, $SiO_2$, $TiO_2$, $ZrO_2$, $GeO_2$, $SnO_2$, $Nb_2O_5$, $Ta_2O_5$ and $ThO_2$; Ln is at least one element selected from the group consisting of Eu, Tb, Ce, Tm, Dy, Pr, Ho, Nd, Yb, Er, Sm and Gd; X is at least one element selected from the group consisting of Cl, Br and I; and $x$ and $y$ are numbers satisfying the conditions of $5 \times 10^{-5} \leq x \leq 0.5$ and $0 < y \leq 0.2$, respectively, as described in Japanese Patent Provisional Publication No. 55(1980)-160078;

$(Ba_{1-x}, M^{II}_x)F_2 \cdot aBaX_2:yEu,zA$, in which $M^{II}$ is at least one element selected from the group consisting of Be, Mg, Ca, Sr, Zn and Cd; X is at least one element selected from the group consisting of Cl, Br and I; A is at least one element selected from the group consisting of Zr and Sc; and $a$, $x$, $y$ and $z$ are numbers satisfying the conditions of $0.5 \leq a \leq 1.25$, $0 \leq x \leq 1$, $10^{-6} \leq y \leq 2 \times 10^{-1}$, and $0 < z \leq 10^{-2}$, respectively, as described in Japanese Patent Provisional Publication No. 56(1981)-116777;

$(Ba_{1-x}, M^{II}_x)F_2 \cdot aBaX_2:yEu,zB$, in which $M^{II}$ is at least one element selected from the group consisting of Be, Mg, Ca, Sr, Zn and Cd; X is at least one element selected from the group consisting of Cl, Br and I; and $a$, $x$, $y$ and $z$ are numbers satisfying the conditions of $0.5 \leq a \leq 1.25$, $0 \leq x \leq 1$, $10^{-6} \leq y \leq 2 \times 10^{-1}$, and $0 < z \leq 2 \times 10^{-1}$, respectively, as described in Japanese Patent Provisional Publication No. 57(1982)-23673;

$(Ba_{1-x}, M^{II}_x)F_2 \cdot aBaX_2:yEu,zA$, in which $M^{II}$ is at least one element selected from the group consisting of Be, Mg, Ca, Sr, Zn and Cd; X is at least one element selected from the group consisting of Cl, Br and I; A is at least one element selected from the group consisting of As and Si; and $a$, $x$, $y$ and $z$ are numbers satisfying the conditions of $0.5 \leq a \leq 1.25$, $0 \leq x \leq 1$, $10^{-6} \leq y \leq 2 \times 10^{-1}$, and $0 < z \leq 5 \times 10^{-1}$, respectively, as described in Japanese Patent Provisional Publication No. 57(1982)-23675;

$M^{III}OX:xCe$, in which $M^{III}$ is at least one trivalent metal selected from the group consisting of Pr, Nd, Pm, Sm, Eu, Tb, Dy, Ho, Er, Tm, Yb, and Bi; X is at least one element selected from the group consisting of Cl and Br; and $x$ is a number satisfying the condition of $0 < x < 0.1$, as described in Japanese Patent Provisional Publication No. 58(1983)-69281;

$Ba_{1-x}M_{x/2}L_{x/2}FX:yEu^{2+}$, in which M is at least one alkali metal selected from the group consisting of Li, Na, K, Rb and Cs; L is at least one trivalent metal selected from the group consisting of Sc, Y, La, Ce, Pr, Nd, Pm, Sm, Gd, Tb, Dy, Ho, Er, Tm, Yb, Lu, Al, Ga, In and Tl; X is at least one halogen selected from the group consisting of Cl, Br and I; and $x$ and $y$ are numbers satisfying the conditions of $10^{-2} \leq x \leq 0.5$ and $0 < y \leq 0.1$, respectively, as described in Japanese Patent Provisional Publication No. 58(1983)-206678;

$BaFX \cdot xA:yEu^{2+}$, in which X is at least one halogen selected from the group consisting of Cl, Br and I; A is at least one fired product of a tetrafluoroboric acid compound; and $x$ and $y$ are numbers satisfying the conditions of $10^{-6} \leq x \leq 0.1$ and $0 < y \leq 0.1$, respectively, as described in Japanese Patent Provisional Publication No. 59(1984)-27980;

$BaFX \cdot xA:yEu^{2+}$, in which X is at least one halogen selected from the group consisting of Cl, Br and I; A is at least one fired product of a hexafluoro compound selected from the group consisting of monovalent and divalent metal salts of hexafluoro silicic acid, hexafluoro titanic acid and hexafluoro zirconic acid; and $x$ and $y$ are numbers satisfying the conditions of $10^{-6} \leq x \leq 0.1$ and $0 < y \leq 0.1$, respectively, as described in Japanese Patent Provisional Publication No. 59(1984)-47289;

$BaFX \cdot xNaX':aEu^{2+}$, in which each of X and X' is at least one halogen selected from the group consisting of Cl, Br and I; and $x$ and $a$ are numbers satisfying the conditions of $0 < x \leq 2$ and $0 < a \leq 0.2$, respectively, as described in Japanese Patent Provisional Publication No. 59(1984)-56479;

$M^{II}FX \cdot xNaX':yEu^{2+}:zA$, in which $M^{II}$ is at least one alkaline earth metal selected from the group consisting of Ba, Sr and Ca; each of X and X' is at least one halogen selected from the group consisting of Cl, Br and I; A is at least one transition metal selected from the group consisting of V, Cr, Mn, Fe, Co and Ni; and $x$, $y$ and $z$ are numbers satisfying the conditions of $0 < x \leq 2$, $0 < y \leq 0.2$ and $0 < z \leq 10^{-2}$, respectively, as described in Japanese Patent Provisional Publication No. 59(1984)-56480; and

$M^{II}FX \cdot aM^{I}X' \cdot bM^{II'}X''_2 \cdot cM^{III}X'''_3 \cdot xA:yEu^{2+}$, in which $M^{II}$ is at least one alkaline earth metal selected from the group consisting of Ba, Sr and Ca; $M^{I}$ is at least one alkali metal selected from the group consisting of Li, Na, K, Rb and Cs; $M'''$ is at least one divalent metal selected from the group consisting of Be and Mg; $M'''$ is at least one trivalent metal selected from the group consisting of Al, Ga, In and Tl; A is at least one metal oxide; X is at least one halogen selected from the group consisting of Cl, Br and I; each of X', X'' and X''' is at least one halogen selected from the group consisting of F, Cl, Br and I; $a$, $b$ and $c$ are numbers satisfying the conditions of $0 \leqq a \leqq 2$, $0 \leqq b \leqq 10^{-2}$, $0 \leqq c \leqq 10^{-2}$ and $a+b+c \geqq 10^{-6}$; and $x$ and $y$ are numbers satisfying the conditions of $0 < x \leqq 0.5$ and $0 < y \leqq 0.2$, respectively, as described in Japanese Patent Application No. 57(1982)-184455.

The above-described stimulable phosphors are given by no means to restrict the stimulable phosphor employable in the present invention. Any other phosphor can be also employed, provided that the phosphor gives stimulated emission when excited with stimulating rays after exposure to a radiation.

Examples of the binder include: natural polymers such as proteins (e.g. gelatin), polysaccharides (e.g. dextran) and gum arabic; and synthetic polymers such as polyvinyl butyral, polyvinyl acetate, nitrocellulose, ethylcellulose, vinylidene chloride-vinyl chloride copolymer, polymethyl methacrylate, vinyl chloride-vinyl acetate copolymer, polyurethane, cellulose acetate butyrate, polyvinyl alcohol, and linear polyester. Particularly preferred are nitrocellulose, linear polyester, and a mixture of nitrocellulose and linear polyester.

The radiosensitive means charged with the stimulable phosphor in the form of a sheet (or a piece of sheet) or strip can be prepared, for instance, by the following procedure.

In the first place, phosphor particles and a binder are added to an appropriate solvent, and then they are mixed to prepare a coating dispersion of the phosphor particles in the binder solution.

Examples of the solvent employable in the preparation of the coating dispersion include lower alcohols such as methanol, ethanol, n-propanol and n-butanol; chlorinated hydrocarbons such as methylene chloride and ethylene chloride; ketones such as acetone, methyl ethyl ketone and methyl isobutyl ketone; esters of lower alcohols with lower aliphatic acids such as methyl acetate, ethyl acetate and butyl acetate; ethers such as dioxane, ethylene glycol monoethylether and ethylene glycol monoethyl ether; and mixtures of the above-mentioned compounds.

The ratio between the binder and the phosphor in the coating dispersion may be determined according to the characteristics of the aimed measuring instrument and the nature of the phosphor employed. Generally, the ratio therebetween is within the range of from 1:1 to 1:100 (binder:phosphor, by weight), preferably from 1:8 to 1:40.

The coating dispersion may contain a dispersing agent to assist the dispersibility of the phosphor particles therein, and also contain a variety of additives such as a plasticizer for increasing the bonding between the binder and the phosphor particles in the formed product. Examples of the dispersing agent include phthalic acid, stearic acid, caproic acid and a hydrophobic surface active agent. Examples of the plasticizer include phosphates such as triphenyl phosphate, tricresyl phosphate and diphenyl phosphate; phthalates such as diethyl phthalate and dimethoxyethyl phthalate; glycolates such as ethylphthalyl ethyl glycolate and butylphthalyl butyl glycolate; and polyesters of polyethylene glycols with aliphatic dicarboxylic acids such as polyester of triethylene glycol with adipic acid and polyester of diethylene glycol with succinic acid.

The coating dispersion containing the phosphor particles and the binder prepared as described above is applied evenly to the surface of a sheet such as a glass plate, a metal plate or a plastic sheet to form a layer of the coating dispersion. The coating procedure can be carried out by a conventional method such as a method using a doctor blade, a roll coater or a knife coater.

After applying the coating dispersion to the sheet, the coating dispersion is then heated slowly to dryness so as to obtain a sheet- or strip-shaped product comprising the binder and the stimulable phosphor dispersed therein. The thickness of the shaped product varies depending upon the kind and intensity of radiation to be measured, the nature of the phosphor, the ratio between the binder and the phosphor, etc. Generally, the thickness of the shaped product is within a range of from 20 μm to 1 mm, preferably from 50 to 500 μm.

Thus obtained shaped product can be employed as a radiosensitive means for the measurement of radiation intensity of a radioactive substance contained in a sample in the present invention. However, it is desirable that the shaped product is covered with a transparent material to protect the stimulable phosphor chemically as well as physically.

The covering of the shaped product comprising the binder and the stimulable phosphor dispersed therein can be conducted, for instance, by coating the surface of the shaped product with a solution of a transparent polymer such as a cellulose derivative (e.g. cellulose acetate or nitrocellulose), or a synthetic polymer (e.g. polymethyl methacrylate, polyvinyl butyral, polyvinyl formal, polycarbonate, polyvinyl acetate, or vinyl chloride-vinyl acetate copolymer), and drying the coated solution. Alternatively, the covering be conducted by beforehand preparing a transparent film from a polymer such as polyethylene terephthalate, polyethylene, polyvinylidene chloride or polyamide, followed by placing and fixing it onto the surface of the shaped product with an appropriate adhesive agent. The protective film preferably has a thickness within a range of approximately 0.1 to 20 μm.

The shaped product is preferably covered not only on the front and back surfaces thereof but also on the side surfaces thereof so as to seal the binder containing the stimulable phosphor therein.

The measuring instrument may be constructed in the form of a structure wherein only one surface of the shaped product is covered with the above protective film, and on the other surface there is provided a support composed of, for example, a plastic sheet such as a sheet of cellulose acetate, polyester or polyethylene terephthalate; or a metallic sheet such as aluminum foil. The support can be provided thereto by fixing it onto the surface of the shaped product with an adhesive agent, or by coating the above-mentioned coating dispersion directly on the support. The provision of a support on one surface of the sheet or strip-shaped product can increase the mechanical strength of the radiosensitive means to be obtained as well as the durability thereof.

It is not always necessary that the stimulable phosphor is dispersed in the binder as described above. In the present invention, the phosphor may be encased within the radiosensitive means whose covering material is made of, for example, the above-described plastic material, glass or quartz.

The so prepared radiosensitive means charged with a stimulable phosphor is not limited to the above-described thin leaf form. As typical embodiments of the radiosensitive means charged with a stimulable phosphor, there can be mentioned the following ones.

Figure 1 is perspective views showing the embodiments of the radiosensitive means charged with a stimulable phosphor for use in the present invention, wherein:

(1) Figure 1-(a) diagrammatically shows a stick-shaped radiosensitive means,

(2) Figure 1-(b) diagrammatically shows a sheet-shaped radiosensitive means, and

(3) Figure 1-(c) diagrammatically shows a cylindrical radiosensitive means.

The above-described three kinds of the embodiments are provided only to illustrate the typical embodiments of the present invention, but are not to be construed as limiting the radiosensitive means charged with the stimulable phosphor in any way.

In the above radiosensitive means (1) to (3), it is not necessary that the stimulable phosphor is contained in the whole parts of the means. The phosphor may be contained in a part of the means in such an amount that a radiation emitted from a sample can be detected with high accuracy. For example, in the radiosensitive means (1), the stimulable phosphor may be contained in the lower half of the stick-shaped means. In the radiosensitive means (2), the phosphor may be contained in the central part of lower half of the sheet-shaped means. In these cases, the upper half containing no stimulable phosphor of the means (1) and (2) can be utilized as a knob (a handle) so that the insertion of the means into a sample for measurement and the withdrawal thereof from the sample can be made easy.

In the radiosensitive means (3), the central part of the cylinder may be hollow or charged with another material. When the central part is hollow, the area to be in contact with a sample increases so that it is possible to measure the radiation intensity of a radioactive substance in the sample with higher accuracy. Further, for the same purpose as that described for the means (1) and (2), a protrusion may be provided as a knob at the upper wall of the cylinder.

Preferably, the surface area of a zone charged with a stimulable phosphor in the radiosensitive means should be increased to enhance the capture of a radiation from a sample, since it becomes possible to improve the accuracy of measured values and to detect a trace amount of a radioactive substance present in the sample or to detect a substance having a weak radiation intensity.

The following illustrates the measurement of radiation intensity according to the present invention by using the radiosensitive means charged with the above-described stimulable phosphor.

Samples to be measured in the present invention, i.e., samples containing a radioactive substance may be in any form of a solid, liquid or a gas. However, in the case that the sample is a gas or a volatile substance, it is necessary to measure it under such condition that the radiosensitive means is sealed up. In the case that the sample is a liquid, it preferably is in a homogeneous phase in order to enhance the accuracy of measurement. As solvents for a sample solution, any solvent immiscible with the binder or with the covering material such as a plastic material may be used. In the case that the sample is a solid, it is desirable to be in a powdery form or to be a soft solid capable of receiving the radiosensitive means therein. It is required no specific carefulness in the preparation of the sample.

Accordingly, the samples of the present invention are not limited to liquids, but it is possible to measure the intensity of radiation from solid materials such as the tissue of radioactively labeled organism and substances originating from the organism by detecting the radioactivity thereof, said solid materials being hardly solubilized. However, it is preferred that the sample is in the form of a liquid in order to measure the radiation intensity thereof with high accuracy.

Any radiation such as α-rays, β-rays, γ-rays, proton beam, neutron beam, meson beam, cosmic rays and other rays radiating from the radioactive substances in the sample can be measured. Namely, any radiation from any radionuclide can be measured.

The radiosensitive means charged with the above-described stimulable phosphor is first inserted into a sample which has been introduced into an appropriate container. In the case of a gaseous sample, the means can be previously placed in the container. In the case that the solid sample is an organism, a container for measurement can be not required.

The radiosensitive means is placed in the sample in a dark room for a given period of time to keep it in contact with the sample, and at least a portion of radiation energy emitted by the radioactive substance in the sample is caused to be absorbed by the stimulable phosphor in the means. The exposure time varies depending on the intensity of radioactivity of the radioactive substance in the sample, the amount and density of said radioactive substance, the shape of the radiosensitive means, the luminance of stimulated

7

emission of the phosphor, etc. The exposure time generally ranges from several seconds to several minutes.

After exposure to a radiation emitted by the sample for a certain time, the radiosensitive means in which the radiation energy is stored is subjected to a detecting operation. The detecting operation may be carried out using the means in the inserted state into the sample. Otherwise, the radiosensitive means is taken out of the sample, which is then washed and subjected to the detecting operation. Preferably, the detecting operation is carried out after the means is taken out of the sample.

The detection of the radiation energy which is emitted by the sample and stored in the stimulable phosphor in the radiosensitive means is carried out as follows: The means is irradiated with light having a wavelength within the region of stimulation wavelength for the stimulable phosphor to emit light (stimulated emission) in the amount proportional to the radiation energy stored therein, and then the stimulated emission is detected by a photodetector such as photomultiplier. The detecting operation is preferably carried out in a dark room. As the photodetector, there is used a detector provided with a filter which transmits only light in the wavelength region of the stimulated emission.

The stimulated emission detected by the photodetector is converted to an electric signal (electric pulse) which is then amplified by an amplifier and input into a pulse height analyzer where noises produced in the photodetector and caused by natural radioactivity are removed. The electric pulse from which noises have been removed is input into a counting circuit to count it and the counted value is input into a data processing circuit.

In the data processing circuit, the intensity of radioactivity is calculated according to detecting efficiency value (luminance efficiency of stimulated emission) previously input and exposure time. Further, the amount or concentration of the radioactive substance contained in the sample can be also calculated by inputting the intensity of radioactivity per 1 mole of the radioactive substance. The resulting data are transmitted to a display device and a recorder.

In this way, the intensity of radioactivity of the sample and/or the amount or concentration of the radioactive substance can be represented as digital data.

However, the above-described method (detecting method) for detecting radiation energy stored in the radiosensitive means is given by no means to limit the method therefor.

After the used radiosensitive means is washed with a solvent, the means is irradiated with light to erase the energy remaining therein and so treated means can be re-used.

In the measuring method of the present invention, the quenching phenomenon caused by the internal absorption of emission in the conventional scintillation counting method, or the quenching phenomenon caused by the external absorption of emission caused by the indirect contact of a sample with a scintillator can be eliminated. This means that the complicated operation for calculating the counting efficiency can be avoided and the intensity of a radiation from a radioactive substance in the sample can be easily calculated.

In the present invention, the selection of a measuring container (vial) and the selection of a detector used in combination therewith, which are required in the conventional liquid scintillation counting method are not required, because the radiosensitive means charged with the stimulable phosphor is taken out of the sample and the radiation energy stored therein can be directly detected for the means *per se*.

If the radioactive substance is present under uneven distribution in the sample, it is possible to obtain information on the distribution in addition to the radiation intensity by using the radiosensitive means charged with a stimulable phosphor such as the cylindrical means as shown in Figure 1-(c) and scanning the surface of the means with an electromagnetic wave (stimulating rays) having a small beam diameter such as laser beam, etc.

Reference is made to the European Patent Applications EP—A—0 127 169, EP—A—0 129 109, EP—A—0 127 866 and EP—A—0 127 170.

**Claims**

1. A method for measuring radiation intensity of a sample containing a radioactive substance, which method comprises the steps of bringing a radiosensitive means into contact with the sample to record the radiation intensity of the sample in the radiosensitive means and of subsequently determining the radiation intensity recorded in the radiosensitive means, which method is characterised by

using a radiosensitive means containing a stimulable phosphor, which stimulable phosphor is able to store radiation energy upon exposure thereto and then to emit light in proportion to the stored energy of the radiation upon stimulation with electromagnetic energy;

bringing said radiosensitive means into contact with the sample by introducing the radiosensitive means into the sample, and

determining the radiation intensity by subjecting the radiosensitive means to electromagnetic energy of a different energy from that from the sample to release the radiation energy stored in the radiosensitive means as stimulated emission of light, and detecting photoelectrically the emitted light.

2. The method according to claim 1, characterised in that the sample containing a radioactive substance is in the form of a liquid.

3. The method according to claim 1, characterised in that said radiosensitive means further comprises a binder in which said stimulable phosphor is dispersed and a plastics material enclosing said binder and stimulable phosphor therein.

4. The method according to claim 1, characterised in that said radiosensitive means is in the form of a strip or a sheet.

5. The method according to any one of claims 1 to 4, characterised in that the stimulable phosphor is a divalent europium activated alkaline earth metal fluorohalide phosphor.

6. The method according to any one of claims 1 to 4, characterised in that the stimulable phosphor is a rare earth element activated rare earth oxyhalide phosphor.

**Patentansprüche**

1. Verfahren zur Messung der Strahlungsintensität einer eine radioaktive Substanz enthaltenden Probe, wobei das Verfahren die Schritte umfaßt, eine strahlungsempfindliche Einrichtung in Berührung mit der Probe zu bringen, um die Strahlungsintensität der Probe in der strahlungsempfindlichen· Einrichtung aufzuzeichnen und darauffolgend die in der strahlungsempfindlichen Einrichtung aufgezeichnete Strahlungsintensität zu bestimmen,

wobei das Verfahren gekennzeichnet ist durch

Verwenden einer strahlungsempfindlichen Einrichtung, die einen anregbaren Leuchtstoff enthält, der Strahlungsenergie speichern kann, wenn er dieser ausgesetzt wird, und dann zu der gespeicherten Energie der Strahlung proportionales Licht beim Anregen mit elektromagnetischer Energie aussenden kann;

Inberührungbringen der strahlungsempfindlichen Einrichtung mit der Probe, indem die strahlungsempfindliche Einrichtung in die Probe eingebracht wird;

Bestimmen der Strahlungsintensität, indem die strahlungempfindliche Einrichtung elektromagnetischer Energie, die von derjenigen der Probe unterschiedlich ist, ausgesetzt wird, um die in der strahlungsempfindlichen Einrichtung gespeicherte Strahlungsenergie als angeregte Lichtstrahlung freizusetzen und das ausgesandte Licht photoelektrisch zu erfassen.

2. Verfahren nach Anspruch 1, dadurch gekennzeichnet, daß die eine radioaktive Substanz enthaltende Probe in flüssiger Form vorliegt.

3. Verfahren nach Anspruch 1, dadurch gekennzeichnet, daß die strahlungsempfindliche Einrichtung ferner ein Bindemittel, in dem der anregbare Leuchtstoff dispergiert ist, und ein Kunststoffmaterial umfaßt, welches das Bindemittel und den anregbaren Phosphor einschließt.

4. Verfahren nach Anspruch 1, dadurch gekennzeichnet, daß die strahlungsempfindliche Einrichtung in der Form eines Streifens oder eines Blattes vorliegt.

5. Verfahren nach irgendeinem der Ansprüche 1 bis 4, dadurch gekennzeichnet, daß der angerbare Leuchtstoff ein mit zweiwertigem Europium aktivierter Erdalkalimetall-Fluorhalogenid-Leuchtstoff ist.

6. Verfahren nach irgendeinem der Ansprüche 1 bis 4, dadurch gekennzeichnet, daß der anregbare Leuchtstoff ein mit einem Seltenerdenelement aktivierter Seltenerde-Oxyhalogenid-Leuchtstoff ist.

**Revendications**

1. Méthode pour la mesure de l'intensité du rayonnement d'un échantillon contenant une substance radioactive, méthode qui comporte les étapes consistant à amener un moyen, sensible au rayonnement, en contact avec l'échantillon pour enregistrer l'intensité du rayonnement de l'échantillon dans le moyen sensible au rayonnement et à déterminer ensuite l'intensité du rayonnement enregistrée dans le moyen sensible au rayonnement, méthode caractérisée par:

l'utilisation d'un moyen, sensible au rayonnement, contenant un élément luminophore stimulable capable d'emmagasiner l'énergie de rayonnement lorsqu'il y est exposé, puis d'émettre de la lumière en proportion de l'énergie de rayonnement emmagasinée lorsqu'il est stimulé par une énergie électromagnétique;

la mise en contact du dit moyen sensible au rayonnement avec l'échantillon en introduisant dans l'échantillon le moyen sensible au rayonnement, et

la détermination de l'intensité du rayonnement en soumettant le moyen sensible au rayonnement à une énergie électromagnétique d'une nature énergétique différente de celle provenant de l'échantillon pour libérer l'énergie de rayonnement emmagasinée dans le moyen sensible au rayonnement sous forme d'émission stimulée de lumière, et le fait de détecter la lumière émise par voie photoélectrique.

2. Méthode selon la revendication 1, caractérisée en ce que l'échantillon contenant une substance radioactive se présente sous forme liquide.

3. Méthode selon la revendication 1, caractérisée en ce que ledit moyen sensible au rayonnement comporte en outre un liant dans lequel le produit luminophore stimulable est dispersé, ainsi qu'un matériau plastique qui enferme ledit liant et ledit élément luminophore stimulable.

4. Méthode selon la revendication 1, caractérisée en ce que le moyen sensible au rayonnement se présente sous la forme d'une bande ou d'une feuille.

5. Méthode selon l'une quelconque des revendications 1 à 4, caractérisée en ce que l'élément luminophore stimulable est un fluorohalogénure d'un métal alcalino-terreux activé par un europium bivalent.

6. Méthode selon l'une quelconque des revendications 1 à 4, caractérisée en ce que l'élément luminophore stimulable est un oxyhalogénure d'une terre rare activé par un élément de terre rare.

# FIG.I

(a)

(b)

(c)